# EUROPEAN PATENT SPECIFICATION

(11) **EP 2 313 217 B1**
(45) Date of publication and mention of the grant of the patent: **03.06.2015**
(21) Application number: 09795249.3
(22) Date of filing: 10.07.2009
(51) Int. Cl.: B21D 22/02, B21D 31/00, B23K 31/02, B21D 53/00, B23K 11/06, B21D 35/00

(54) **METAL FORMING PROCESS AND WELDED COIL ASSEMBLY**
VERFAHREN ZUR METALLFORMUNG UND GESCHWEISSTE COILANORDNUNG
PROCÉDÉ DE FORMAGE DE MÉTAL ET ENSEMBLE DE BOBINE SOUDÉE

(30) Priority: 10.07.2008 US 79717 P
(43) Date of publication of application: 27.04.2011
(73) Proprietor: Shiloh Industries, Inc., Valley City, OH 44280 (US)
(72) Inventor: KEYS, James, F., Northville MI 48167 (US)
(74) Representative: Harrison, Michael Robert
(86) International application number: PCT/US2009/050280
(87) International publication number: WO 2010/006278

(56) References cited:
- EP-A2- 1 106 274
- DE-B3-102005 062 063
- JP-A- 11 104 749
- JP-A- 2001 269 785
- US-A1- 2007 163 121
- US-A1- 2008 115 445

## Description

### Field of Invention

The present invention generally relates to a metal forming process and to a welded coil assembly.

### Background

So-called tailor welded blanks have been developed where a thin piece of metal is welded or otherwise attached to a thick piece of metal before stamping, drawing or otherwise forming the welded assembly into a finished part. Although material and weight savings may sometimes be enjoyed through the use of tailor welded blanks, certain applications and processes may not be optimized by processing material that is provided in a blanked form. JP-A-411104749 discloses a metal forming process and a welded coil assembly wherein three sheet metal coils are welded together and wherein a finished component is formed from the welded coil.

### Summary

According to one aspect, there is provided a metal forming process according to the features of claim 1.

According to another aspect, there is provided a welded coil assembly for use in a metal forming process according to the features of claim 9.

### Description of the Drawings -

A preferred exemplary embodiment of the invention will hereinafter be described in conjunction with the appended drawings, wherein like designations denote like elements, and wherein:
FIG.1 is a flow chart illustrating some of the steps performed in an exemplary metal forming process;
FIGS. 2A-2C are top views of several exemplary welded coil assemblies made from metal blanks and sheet metal coils, these welded coil assemblies may be used in the exemplary metal forming process of FIG. 1;
FIG. 3 is a perspective view of the welded coil assembly of FIG. 2C being recoiled after it is assembled;
FIG. 4 is a perspective view of the exemplary welded coil assembly of FIG. 3 being processed with an exemplary progressive stamping apparatus;
FIG. 5 is an enlarged view of the exemplary welded coil assembly of FIG. 4 showing various stages that may be performed with the exemplary progressive stamping apparatus of FIG. 4;
FIGS. 6A-6B are views of several exemplary components that can result from the exemplary metal forming process of FIG. 1; and
FIGS. 7A-7F are top views of exemplary welded coil assembly units that can be used with or formed by the exemplary progressive stamping apparatus of FIG. 4.

### Description of Preferred Embodiment -

The metal forming process described herein may be used to form complex metal components in a manner that is efficient, reduces the amount of scrap metal, and maintains the structural integrity of the components. Generally, a number of individual metal blanks are welded to one or more sheet metal coils in order to produce a welded coil assembly. The welded coil assembly -- in coiled or uncoiled form -- can then be fed through a progressive stamping apparatus to create a complex metal part. Although the following description is provided in the context of forming exemplary automotive components, it should be appreciated that the metal forming process and the welded coil assembly described below could instead be used to form non-automotive components including those for aircrafts, boats, agricultural equipment, recreational vehicles, and appliances, to name but a few.

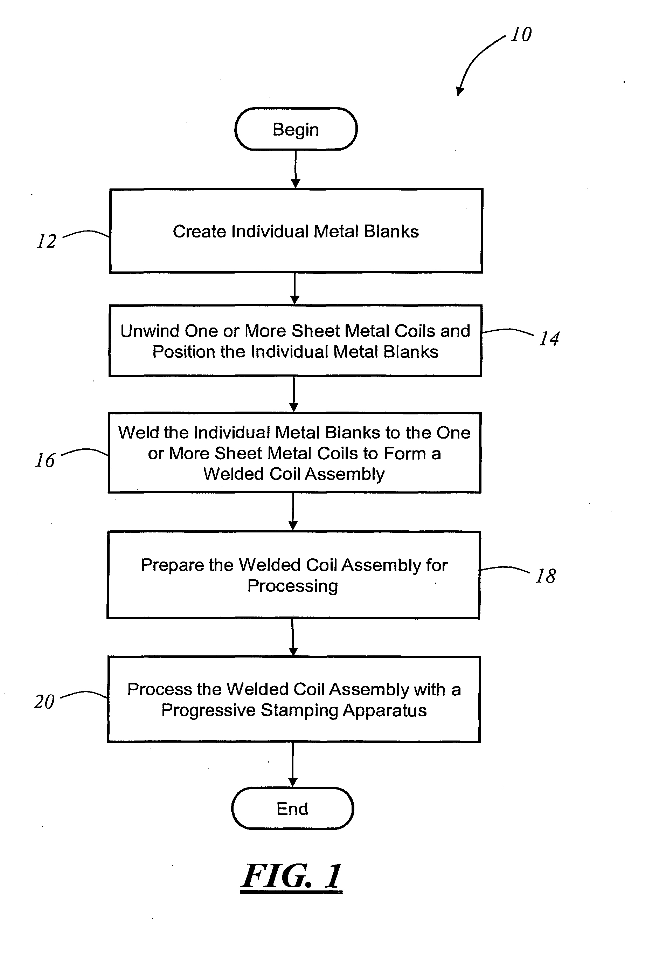

With reference to FIG. 1, there is shown an exemplary metal forming process 10 that may be used to manufacture an automotive component; in this case, a two-piece side rail for a seat assembly having both thicker and thinner gauge metal pieces. Though process 10 is described as having certain steps performed in a certain order, it should be appreciated that the process need not have each and every step and need not be performed in the exact order shown here. For instance, a metal forming process could have different parameters within a particular step, it could include other steps in addition to or in lieu of those shown here, or it could be performed in a different order, to cite a few possibilities.

Beginning with step 12, individual metal blanks are created by one of a number of different operations in order to best optimize the material used. The exact operation used to create the metal blanks may depend on the dimensions of the metal blanks, the volume of parts being processed, or the type of material used, but a couple of examples include various cutting and blanking operations. Laser cutting, water-jet cutting, die blanking, scroll slitting, or any other suitable process for producing individual metal blanks could be used. In some cases, it may be desirable to create the metal blanks from a different gauge and/or grade metal than that used in the adjoining sheet metal coils; thus producing a so-called tailor welded blank. For example, instead of forming an entire seat assembly side rail from a thicker gauge metal, it could reduce cost and weight by forming only a portion of the assembly from the thicker metal and using a thinner gauge metal for the remainder of the part. Of course, metal blanks could also be used that have the same gauge and/or grade as the other portions of the assembly.

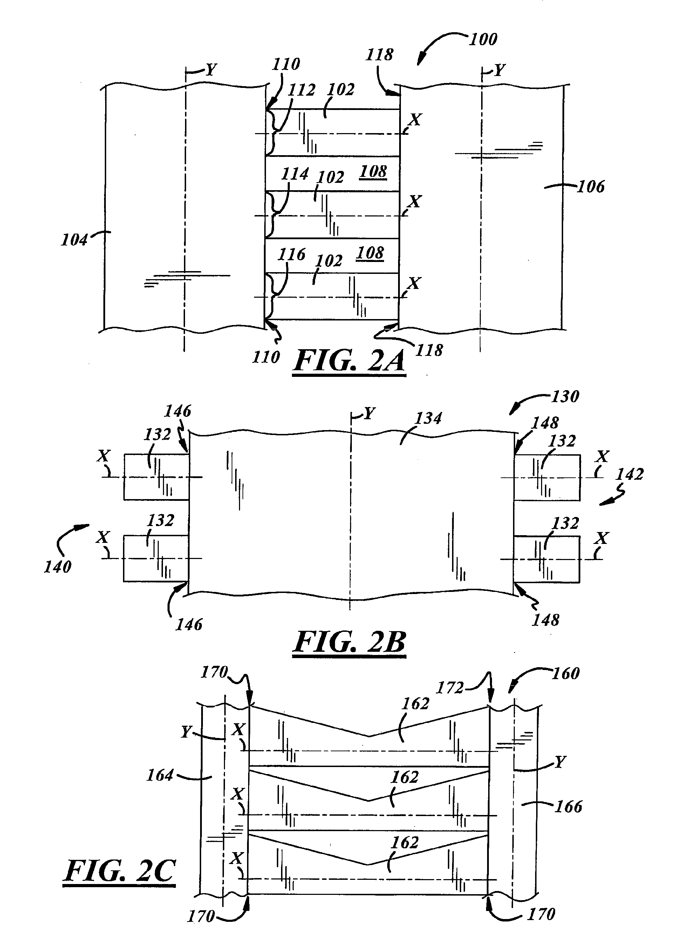

Referring to FIGS. 2A-2C, several exemplary embodiments of metal blanks are shown as part of welded coil assemblies. In FIG. 2A, a welded coil assembly 100 is illustrated that has a number of individual metal blanks 102 connected between two sheet metal coils 104, 106. In this particular embodiment, metal blanks 102 have a generally rectangular shape and extend along a longitudinal axis X that is generally perpendicular to a longitudinal axis Y of the sheet metal coils 104, 106 (only portions of the sheet metal coils are shown here for purposes of illustration). By using metal blanks 102 in between sheet metal coils 104, 106, instead of using a single sheet metal coil that is both wide and continuous, a significant amount of scrap metal can be saved. The material savings is roughly equal to the sum of the interior spaces 108 that exist between successive metal blanks 102. It should be appreciated that the shape, size, orientation, and location of the individual metal blanks can differ from the exemplary embodiment shown in FIG. 2A.

For example, FIG. 2B shows a welded coil assembly 130 that has a number of individual metal blanks 132 attached to the outer sides or edges of a single sheet metal coil 134. In this embodiment, the metal blanks 132 have a generally rectangular or square shape and are attached at different locations along the longitudinal length of sheet metal coil 134. Metal blanks 132 are grouped into a first set of blanks 140 located on the left side of the sheet metal coil, and a second set of blanks 142 located on the right side of the sheet metal coil. The two sets of blanks 140, 142 may be positioned or aligned so that they act as mirror images of one another, or they may be offset, staggered or otherwise arranged to accommodate the particularities of the metal part for which they are being used to form. Again, the two sets of blanks 140, 142 may be made from the same material or they may include blanks of varying thickness, size, material, etc.

In FIG. 2C, a welded coil assembly 160 includes a number of individual metal blanks 162 attached between sheet metal coils 164, 166; however, the metal blanks of this embodiment are formed as "configured blanks," which are designed to more closely follow the shape of the finished component than do non-configured blanks. Configured blanks can therefore decrease scrap metal and lower the material costs. As mentioned above, although metal blanks 102, 132, 162 could be made of a thicker gauge material than that used to make the corresponding sheet metal coils 104, 106, 134, 164, 166, this is not necessary. It is possible for the individual metal blanks to be made of a thinner gauge material or for them to have the same thickness as the sheet metal coils, for example. Furthermore, it is possible for the various individual metal blanks to be made of the same thickness or varying thicknesses; that is, the metal blanks can be uniform in thickness or they can vary. In the case of more than one sheet metal coil (for example, welded coil assemblies 100, 160), different coils can have different thicknesses and lateral widths with respect to each other. These and other characteristics are largely driven by the final component or metal part being constructed.

Continuing with step 14 of FIG. 1, one or more sheet metal coils are unwound from their original coiled form, as may be the case when they are shipped from a supplier, and the individual metal blanks are put into position. The sheet metal coils can be unwound by one of a number of different unwinding machines and techniques, as is understood by skilled artisans. In the embodiments of FIGS. 2A and 2C, an unwinding apparatus may be used to uncoil two sheet metal coils at the same time. This could be accomplished with separate unwinding stations or with a single unwinding station designed to concurrently accommodate multiple coils. The resulting sheet metal coils can then be laid flat, fixtured, or otherwise held in place for subsequent attachment of the metal blanks, as will be subsequently described. It is possible that additional processing or fabrication steps could be performed on the sheet metal coils. The individual metal blanks can be positioned manually, automatically, or otherwise, with respect to the sheet metal coils. For instance, in the embodiment of FIG. 2A, the individual metal blanks 102 that were created in the previous step could be automatically positioned between sheet metal coils 104, 106 by a robotic arm having magnetic or suction means that enable it to carry the workpiece. In the FIG. 2B embodiment, an operator could manually position the first and second sets 140, 142 of metal blanks on the outside edges of sheet metal coil 134, for example. Again, these are just some of the possibilities.

In step 16, the individual metal blanks are welded at different locations along the length of the one or more sheet metal coils in order to form a welded coil assembly. Thus, a welded coil assembly includes more than one individual metal blank joined to one or more sheet metal coils in order to provide an elongated welded assembly. In some cases, such as the exemplary embodiments shown in FIGS. 2A and 2C, the elongated assembly resembles a ladder, with the metal blanks constituting rungs of the ladder and the sheet metal coils constituting the vertical legs or supports of the ladder. Metal blanks 102, 132, 162 can be attached to sheet metal coils 104/106, 134, 164/166, respectively, by any number of welding operations including, but not limited to, laser welding and mesh seam welding. This may result in one or more weld seams between the metal blanks and the sheet metal coils; weld seam types can include butt joints, lap joints, as well as any other suitable weld joint known in the art. The terms "weld," "welding," "welded," and their various other forms, as used herein, broadly include all metallurgical processes where two or more metal pieces are joined together, including all types of known welding techniques, as well as brazing, soldering, etc.

In the example of FIG. 2A, a discontinuous weld seam 110 is formed between the left-hand ends of metal blanks 102 and the right-hand edge of sheet metal coil 104. Discontinuous weld seam 110 includes a number of distinct weld segments 112, 114, 116, etc. A similar discontinuous weld seam 118 is created on the other side of metal blanks 102 with sheet metal coil 106. Weld segments 112, 114, 116 can be continuous from comer-to-corner of each metal blank 102, or they can be discontinuous within the weld segment whereby a section between the metal blank and sheet metal coil remains unwelded. In the embodiment of FIG. 2B, a first discontinuous weld seam 146 exists between the first set 140 of metal blanks and the left-hand side of sheet metal coil 134, and a second discontinuous weld seam 148 exists between the second set 142 of metal blanks and the right-hand side of the sheet metal coil. In FIG. 2C, discontinuous weld seams 170 and 172 do not have significant unwelded sections that exist between the metal blanks (small unwelded sections exist, but they are generally smaller than those of FIGS. 2A and 2B). This is primarily due to the fact that metal blanks 162 are spaced so close together. The weld seams between the various metal blanks and the one or more sheet metal coils may be continuous weld seams, as opposed to the discontinuous weld seams described above which are simply exemplary.

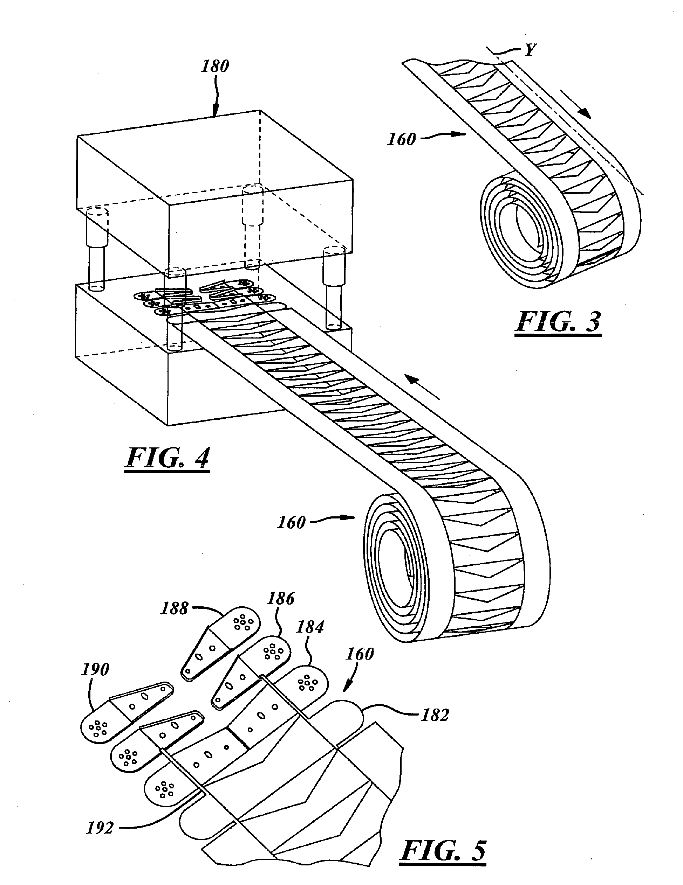

It should be appreciated that at this point a welded coil assembly has been created for subsequent processing through a progressive stamping operation or some other die apparatus; this is true whether the welded coil assembly is in a rolled form or in an unrolled form (e.g., the entire assembly 160 in FIG. 3 is a welded coil assembly, including both the coiled and the elongated sections). An illustrative example of a welded coil assembly 160 is shown in FIG. 3, where this assembly generally corresponds to that shown in the embodiment of FIG. 2C. In step 18, the welded coil assembly is prepared for processing with a die apparatus, such as a progressive die apparatus. The nature of the preparation depends on the location of the die apparatus and the nature of the metal processing, among other things. For example, if welded coil assembly 160 needs to be transported to another location for processing -- as may be the case for a die apparatus that vibrates excessively during operation and hence could interfere with the previous welding operations -- the welded coil assembly could be recoiled for shipping (this is generally illustrated in FIG. 3). Recoiling welded coil assembly 160 may be useful for shipping it to another location or facility, or shipping it to a distant station or area within the same facility; coiled material is oftentimes easier to ship and handle than uncoiled material.

Welded coil assembly 160 can be recoiled by a number of different recoiling machines and techniques, as is understood by skilled artisans. In some cases, techniques may be used in order to protect the integrity of the weld seams that exist in the welded coil assembly. For example, welded coil assembly 160 can be wound loosely on a larger diameter spool than would otherwise be the case such that the weld seams are only slightly stressed by the recoiling. In the example with discontinuous weld seams 110, 118 of FIG. 2A, welded coil assembly 100 can be wound loosely so that weld segments 112, 114, 116 are not flexed or overly stressed; such an arrangement would form a somewhat polygonal shape when viewed from the end of the coil. Discontinuous weld seams 110, 118 would then be at most only slightly stressed, or not stressed at all. Once recoiled, the welded coil assembly can be moved to another facility, or relocated within the same facility, for example. On the other hand, the welded coil assembly need not be recoiled and transported, as the welded coil assembly can instead be directly fed into a nearby die apparatus.

Lastly, in step 20, the welded coil assembly is processed with the die apparatus, such as a progressive stamping apparatus. Skilled artisans will appreciate that a typical progressive stamping operation may include any combination of cutting, trimming, punching, coining, bending, forming, stamping and/or other actions, in a series of sequential stages. Still taking the illustrative example of welded coil assembly 160, FIG. 4 shows the welded coil assembly being uncoiled and fed to a schematically illustrated progressive stamping apparatus 180 by, for example, an unwinding machine and/or a feeding machine such as a conveyor system. Referring to FIG. 5, the various actions performed by progressive stamping apparatus 180 may include an initial cutting operation to form an initially cut part 182 (this part can be held together with adjacent parts by a web 192 or the like), a holing and cutting operation to form a holed part 184, a trimming or folding operation of various edges to form a trimmed part 186, and a final cutting operation to separate the trimmed part from welded coil assembly 160 and form a pair of finished components 188, 190. When processed this way, two finished components are formed simultaneously, as opposed to being formed in separate processes with separate equipment. This is particularly suitable for components that, in use, have an opposing or opposite relationship such as the previously mentioned two-piece side rail of a vehicle seat assembly (such an assembly has both right- and left-hand parts). Of course, the exact progressive stamping operation can vary, and will depend on, among other things, the design of the particular finished component and the design of the particular progressive stamping apparatus. As previously mentioned, other combinations of progressive stamping operations could be used, including those having more, less, or different steps than the exemplary embodiment just described.

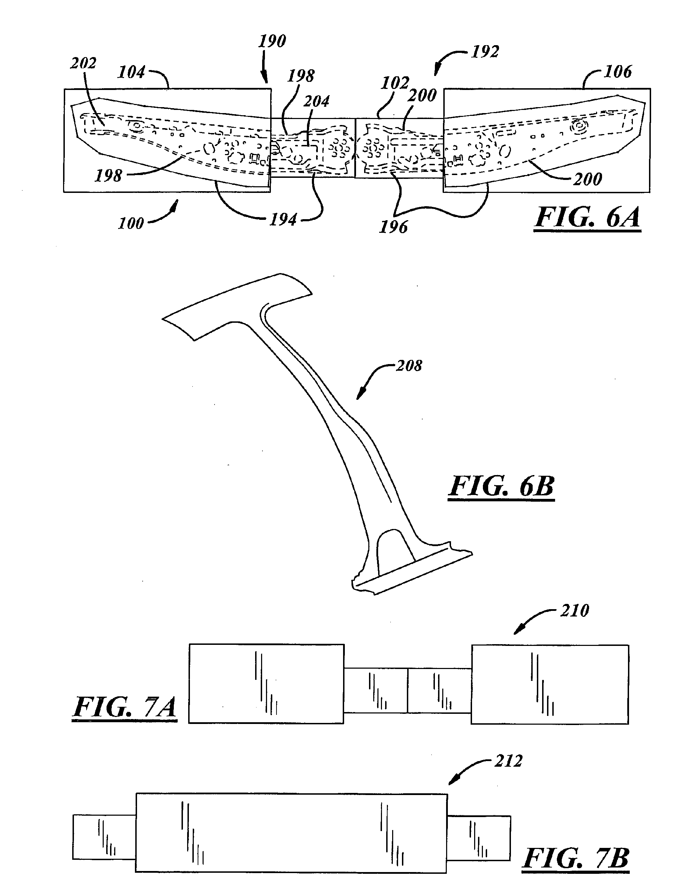

Some exemplary components are shown in FIGS. 6A and 6B. In FIG. 6A, first and second side rails 190, 192 of a vehicle seat assembly are shown schematically in: an unprocessed form including metal blank 102 and sheet metal coils 104, 106; a trimmed form with trim lines 194, 196; and a finished form with first and second finished components 198, 200. Accordingly, the metal forming process described above can process a single section of the welded coil assembly that includes at least one metal blank (e.g., metal blank 102) and a section of at least one sheet metal coil (e.g., the sections of sheet metal coils 104, 106 shown in FIG. 6A), so that a plurality of finished components (e.g., finished components 198, 200) are simultaneously made from a single section of the welded coil assembly. This type of process and product may be advantageous over conventional metal forming techniques for a variety of reasons, including the weight and material savings that can be enjoyed from forming the finished components from a welded coil assembly, such as those described above. This may be particularly true in the case of so-called tailor welded constructions where only part of the welded coil assembly is made from a thick gauge metal (e.g., only metal blank 102 is made from a thick gauge metal, as opposed to the entire assembly including both sheet metal coils 104, 106).

Before being progressively processed, first and second side rails 190, 192 start off being made out of metal blank 102 and sheet metal coils 104, 106 (according to the FIG. 2A example). Trim lines 194, 196 represent the respective perimeters of the trimmed yet unfinished component before it is finally processed. Once completed, first finished component 198 is made from one half of metal blank 102 and sheet metal coil 104; if so designed, metal blank 102 may have a thicker gauge than sheet metal coil 104. A thicker gauge may be needed where the metal blank portion 102 of finished component 198 is subjected to greater static and/or dynamic forces during use than is the sheet metal coil portion 104 of finished component 198, as may be the case for first and second side rails 190, 192. Likewise, second finished component 200 is made from the other half of metal blank 102 and sheet metal coil 106.

In FIG. 6B, an exemplary pillar 208, such as a window or windshield pillar, is shown that can be processed out of any one of the exemplary welded coil assemblies described above. Other automotive components that could be made from the above-described metal forming process include door panels and sun roof structures, to name but a few. Though the welded coil assemblies are well-suited for being fed into a progressive stamping apparatus, the welded coil assemblies could be cut or otherwise severed into distinct unconnected welded coil assembly units, as opposed to being cut at the final stage of the progressive stamping operation. FIGS. 7A-7F show several exemplary embodiments of an unconnected welded coil assembly unit that can be formed at an early stage of the progressive stamping operation and then subsequently progressively processed. The welded coil assembly units can subsequently be progressively processed, or they can be processed by another operation such as a transfer stamping operation where the units are moved from station-to-station by robotic arms, conveyors, or by other carrying equipment.

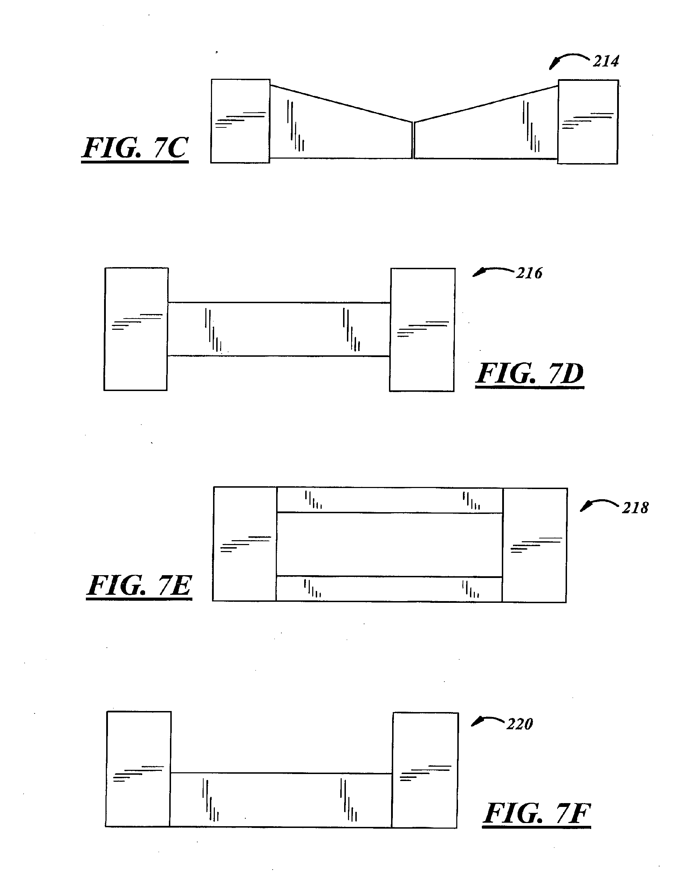

In FIG. 7A, a welded coil assembly unit 210 is cut from welded coil assembly 100 of FIG. 2 A; in FIG. 7B, a welded coil assembly unit 212 is cut from welded coil assembly 130 of FIG. 2B; and in FIG. 7C, a welded coil assembly unit 214 is cut from welded coil assembly 160 of FIG. 2C. In each of these cases, a single welded coil assembly unit can make two finished components or parts; however, this is not necessary. For example, it's possible for welded coil assembly unit 210 to be designed to make one final part, three parts, four parts, etc. In FIG. 7D, a welded coil assembly unit 216 has an I-shape and is cut from a welded coil assembly similar to that of FIG. 2A; likewise, in FIG. 7E, a welded coil assembly unit 218 has an O-shape, and in FIG. 7F, a welded coil assembly unit 220 has a U-shape.

It is to be understood that the foregoing description is not a definition of the invention itself, but is a description of one or more preferred exemplary embodiments of the invention. The invention is not limited to the particular embodiment(s) disclosed herein. Furthermore, the statements contained in the foregoing description relate to particular embodiments and are not to be construed as limitations on the scope of the invention or on the definition of terms used in the claims, except where a term or phrase is expressly defined above. Various other embodiments and various changes and modifications to the disclosed embodiment(s) will become apparent to those skilled in the art. All such other embodiments, changes, and modifications are intended to come within the scope of the appended claims.

As used in this specification and claims, the terms "for example", "e.g.," "for instance", "like", and "such as," and the verbs "comprising," "having," "including," and their other verb forms, when used in conjunction with a listing of one or more components or other items, are each to be construed as open-ended, meaning that that the listing is not to be considered as excluding other, additional components or items. Other terms are to be construed using their broadest reasonable meaning unless they are used in a context that requires a different interpretation.

## Claims

1. A metal forming process, comprising the steps of;
(a) creating a plurality of individual metal blanks (102, 132, 162);
(b) welding the plurality of individual metal blanks to at least one sheet metal coil (104, 106, 134, 164, 166) to form a welded coil assembly (100, 130, 160), wherein each of the individual metal blanks is welded to the sheet metal coil at different locations along the longtudinal length of the sheet metal coil with a discontinuous weld scam (110, 118, 146, 148, 170, 172) that includes a plurality of distinct weld segments (112, 114, 116) that attach the individual metal blanks to a longitudinal edge of the sheet mental coil; and
(c) forming a finished component (188, 190, 198, 200) by processing the welded coil assembly through a die apparatus (180).

2. The metal forming process of claim 1, wherein the plurality of individual metal blanks (102, 132, 162) has a first thickness and the at least on sheet metal coil (104, 106, 134, 164, 166) has a second thickness that is different than the first thickness.

3. The metal forming process of claim 1, wherein step (b) further comprises welding the plurality of individual metal blanks (102, 132, 162) to a first sheet metal coil (104, 164) and a second sheet metal coil (106, 166) so that the plurality of individual metal blanks are located between the first and second sheet metal coils.

4. The metal forming process of claim 3, wherein step (b) further comprises forming a first discontinuous weld seam (110, 170) between the plurality of individual metal blanks (102, 162) and a second metal coil (104, 164) and a second discontinuous weld scam (118, 172) between the plurality of blanks and the second sheet metal coil (106, 166), wherein the first and second discontinuous weld seams each includes a plurality of distinct weld segments (112, 114, 1160 along the length of the first and second sheet metal coils, respectively.

5. The metal forming process of claim 1, wherein step (b) further comprises welding a first set of individual metal blanks (140) and a second set of individual metal blanks (142) to a sheet metal coil (134) so that the first and second sets of individual metal blanks are located on opposite sides of the sheet metal coil.

6. The metal forming process of claim 5, wherein step (b) further comprises forming a first discontinuous weld seam (1.46) between the first set of individual metal blanks (140) and a first side of the sheet metal coil (134) and a second discontinuous weld seam (148) between the second set of individual metal blanks (142) and a second side of the sheet metal coil, wherein the first and second discontinuous weld seas each includes a plurality of distinct weld segments along the length of the sheet metal coil.

7. The metal forming process of claim 1, wherein step (c) further comprises forming finished component (188, 190, 198, 200) by processing the welded coil assembly (100, 130, 160) through a progressive stamping process.

8. The metal forming process of claim 1, wherein step (c) further comprises forming the finished component (188, 190, 198, 200) by processing a single section of the welded coil assembly (100, 130, 160) that includes at least one metal blank (102, 132, 162) and a section of at least one sheet metal coil (104, 106, 134, 164, 166), wherein a plurality of finished components are simultaneously made from the single section of the welded coil assembly.

9. A welded coil assembly (100, 130, 160) for use in a metal forming process, comprising;
at least one sheet metal coil (104, 106, 134, 164, 166); and
a plurality of individual metal blanks (102, 132, 162) that are welded to the sheet metal coil at different locations along the longitudinal length of the sheet metal coil with a discontinuous weld seam (110, 118, 146, 148, 170, 172) that includes a plurality of distinct weld segments (112, 114, 116) that attach the individual metal blanks to a longitudinal edge of the sheet metal coil.

10. The welded coil assembly of claim 9, wherein the plurality of individual metal blanks (102, 132, 162) has a first thickness and the sheet metal coil (104, 106, 134, 164, 166) has a second thickness that 1 different than the first thickness.

11. The welded coil assembly of claim 9, wherein the plurality of individual metal blanks (102, 132, 162) are welded to a first sheet metal coil (104, 164) and a seconde sheet metal coil (106, 166) so that the plurality of individual metal blanks are located between the first and second sheet metal coils.

12. The welded coil assembly of claim 11, further comprising a first discontinuous weld seam (110, 170) between the plurality of individual metal blanks (102, 162) and the first sheet metal coil (104, 164) and a second discontinuous weld seam (118, 172) between the plurality of blanks and the second sheet metal coil (106, 166), wherein the first and second discontinuous weld scams include a plurality of distinct weld segments (112, 114, 116) along the length of the first and second sheet metal coils, respectively.

13. The welded coil assembly of claim 9, wherein the plurality of individual metal blanks (132) includes a first set of individual metal blanks (140) that are welded to a first side of the sheet metal coil (134) at different locations along its length, and a second set of individual metal blanks (142) that are welded to a second side of the sheet metal coil at different locations along its length.

14. The welded coil assembly of claim 13, further comprising a first discontinuous weld seam (146) between the first set of individual metal blanks (140) and the first side of the sheet metal coil (134) and a second discontinuous weld seam (148) between the second set of individual metal blanks (142) and the second side of the sheet metal coil, wherein the first and second discontinuous weld seams each includes a plurality of distinct weld segments along the length of the sheet metal coil.

15. The welded coil assembly of claim 9, wherein a single section of the welded coil assembly (100, 130, 160) includes at least one metal blank (102, 132, 162) and a section of at least one sheet metal coil (104, 106, 134, 164, 166), and a plurality of finished components (188, 190, 198, 200) can be simultaneously made from the shingle section of the welded coil assembly.

## Patentansprüche

1. Ein Metallformungsprozess, bestehend aus den folgenden Schritten;
(a) Herstellung einer Vielzahl einzelner Metallrohlinge (102, 132, 162);
(b) Schweißen einer Vielzahl einzelner Metallrohlinge an mindestens einen Blechbund (104, 106, 134, 164, 166), um eine geschweißte Bundanordnung (100, 130, 160) zu bilden, wobei jeder der einzelnen Metallrohlinge an einer unterschiedlichen Stelle entlang der Längsrichtung des Blechbundes an den Blechbund angeschweißt ist, mit einer unterbrochenen Schweißnaht (110, 118, 146, 148, 170, 172), die eine Vielzahl verschiedener Schweißsegmente (112, 114, 116) einschließt, die die einzelnen Metallrohlinge mit einer Längskante des Blechbundes verbinden; und
(c) Herstellung eines Fertigteils (188, 190, 198, 200) durch Bearbeitung der geschweißten Bundanordnung mit einer Stanzmaschine (180).

2. Der Metallformungsprozess in Anspruch 1, wobei die Vielzahl der einzelnen Metallrohlinge (102, 132, 162) eine erste Dicke und der mindestens eine Blechbund (104, 106, 134, 164, 166) eine zweite Dicke aufweist, die sich von der ersten Dicke unterscheidet.

3. Der Metallformungsprozess in Anspruch 1, wobei Schritt (b) darüberhinaus das Schweißen der Vielzahl von einzelnen Metallrohlingen (102, 132, 162) an einen ersten Blechbund (104, 164) und an einen zweiten Blechbund (106, 166) umfasst, so dass sich die Vielzahl der einzelnen Metallrohlinge zwischen dem ersten und dem zweiten Blechbund befindet.

4. Der Metallformungsprozess in Anspruch 3, wobei Schritt (b) darüberhinaus die Bildung einer ersten unterbrochenen Schweißnaht (110, 170) zwischen der Vielzahl einzelner Metallrohlinge (102, 162) und einem zweiten Blechbund (104, 164) und eine zweite unterbrochene Schweißnaht (118, 172) zwischen der Vielzahl von Rohlingen und dem zweiten Blechbund (106, 166) umfasst, wobei die erste und zweite unterbrochene Schweißnaht jeweils eine Vielzahl verschiedener Schweißsegmente (112, 114, 116) in Längsrichtung des ersten bzw. zweiten Blechbundes einschließt.

5. Der Metallformungsprozess in Anspruch 1, wobei Schritt (b) darüberhinaus das Schweißen eines ersten Satzes einzelner Metallrohlinge (140) und eines zweiten Satzes einzelner Metallrohlinge (142) an einen Blechbund (134) umfasst, so dass sich der erste und der zweite Satz der einzelnen Metallrohlinge auf gegenüberliegenden Seiten des Blechbundes befinden.

6. Der Metallformungsprozess in Anspruch 5, wobei Schritt (b) darüberhinaus die Bildung einer ersten unterbrochenen Schweißnaht (146) zwischen dem ersten Satz einzelner Metallrohlinge (140) und einer ersten Seite des Blechbundes (134) und eine zweite unterbrochene Schweißnaht (148) zwischen dem zweiten Satz einzelner Metallrohlinge (142) und einer zweiten Seite des Blechbundes umfasst, wobei die erste und zweite unterbrochene Schweißnaht jeweils eine Vielzahl verschiedener Schweißsegmente in Längsrichtung des Blechbundes einschließt.

7. Der Metallformungsprozess in Anspruch 1, wobei Schritt (c) darüberhinaus die Herstellung eines Fertigteils (188, 190, 198, 200) durch Bearbeitung der geschweißten Bundanordnung (100, 130, 160) in einem schrittweisen Stanzprozess umfasst.

8. Der Metallformungsprozess in Anspruch 1, wobei Schritt (c) darüberhinaus die Herstellung des Fertigteils (188, 190, 198, 200) durch Bearbeitung eines einzelnen Abschnitts der geschweißten Bundanordnung (100, 130, 160), der mindestens einen Metallrohling (102, 132, 162) einschließt, und eines Abschnitts mindestens eines Blechbundes (104, 106, 134, 164, 166) umfasst, wobei eine Vielzahl von Fertigteilen gleichzeitig aus dem einzelnen Abschnitt der geschweißten Bundanordnung gefertigt wird.

9. Eine geschweißte Bundanordnung (100, 130, 160) zur Verwendung in einem Metallformungsprozess, bestehend aus;
mindestens einem Blechbund (104, 106, 134, 164, 166); und
einer Vielzahl einzelner Metallrohlinge (102, 132, 162), die an unterschiedlichen Stellen entlang der Längsrichtung des Blechbundes an den Blechbund angeschweißt sind, mit einer unterbrochenen Schweißnaht (110, 118, 146, 148, 170, 172), die eine Vielzahl verschiedener Schweißsegmente (112, 114, 116) einschließt, die die einzelnen Metallrohlinge mit einer Längskante des Blechbundes verbinden.

10. Die geschweißte Bundanordnung in Anspruch 9, wobei die Vielzahl der einzelnen Metallrohlinge (102, 132, 162) eine erste Dicke und der Blechbund (104, 106, 134, 164, 166) eine zweite Dicke aufweist, die sich von der ersten Dicke unterscheidet.

11. Die geschweißte Bundanordnung in Anspruch 9, wobei die Vielzahl der einzelnen Metallrohlinge (102, 132, 162) an einen ersten Blechbund (104, 164) und an einen zweiten Blechbund (106, 166) geschweißt wird, so dass sich die Vielzahl der einzelnen Metallrohlinge zwischen dem ersten und dem zweiten Blechbund befindet.

12. Die geschweißte Bundanordnung in Anspruch 11, darüberhinaus bestehend aus einer ersten unterbrochenen Schweißnaht (110, 170) zwischen der Vielzahl einzelner Metallrohlinge (102, 162) und dem ersten Blechbund (104, 164) und einer zweiten unterbrochenen Schweißnaht (118, 172) zwischen der Vielzahl von Rohlingen und dem zweiten Blechbund (106, 166), wobei die erste und zweite unterbrochene Schweißnaht jeweils eine Vielzahl verschiedener Schweißsegmente (112, 114, 116) in Längsrichtung des ersten bzw. zweiten Blechbundes einschließt.

13. Die geschweißte Bundanordnung in Anspruch 9, wobei die Vielzahl der einzelnen Metallrohlinge (132) einen ersten Satz einzelner Metallrohlinge (140) einschließt, die an eine erste Seite des Blechbundes (134) an verschiedenen Stellen in Längsrichtung geschweißt sind, und einen zweiten Satz einzelner Metallrohlinge (142) einschließt, die an eine zweite Seite des Blechbundes an verschiedenen Stellen in Längsrichtung geschweißt sind.

14. Die geschweißte Bundanordnung in Anspruch 13, darüberhinaus bestehend aus einer ersten unterbrochenen Schweißnaht (146) zwischen dem ersten Satz einzelner Metallrohlinge (140) und der ersten Seite des Blechbundes (134) und einer zweiten unterbrochenen Schweißnaht (148) zwischen dem zweiten Satz einzelner Metallrohlinge (142) und der zweiten Seite des Blechbundes, wobei die erste und zweite unterbrochene Schweißnaht jeweils eine Vielzahl verschiedener Schweißsegmente in Längsrichtung des Blechbundes einschließt.

15. Die geschweißte Bundanordnung in Anspruch 9, wobei ein einzelner Abschnitt der geschweißten Bundanordnung (100, 130, 160) mindestens einen Metallrohling (102, 132, 162) und einen Abschnitt mindestens eines Blechbundes (104, 106, 134, 164, 166) einschließt, und eine Vielzahl von Fertigteilen (188, 190, 198, 200) kann gleichzeitig aus dem einzelnen Abschnitt der geschweißten Bundanordnung gefertigt werden.

## Revendications

1. Procédé de formage de métal, comprenant les étapes consistant à :
(a) créer une pluralité d'ébauches métalliques individuelles (102, 132, 162) ;
(b) souder la pluralité d'ébauches métalliques individuelles en au moins une boucle en feuillard métallique (104, 106, 134, 164, 166) pour former un assemblage de boucle soudé (100, 130, 160), dans lequel chacune des ébauches métalliques individuelles est soudée à la boucle en feuillard métallique à différents endroits sur la longueur longitudinale de la boucle en feuillard métallique par un cordon de soudure discontinu (110, 118, 146, 148, 170, 172) qui inclut une pluralité de segments soudés distincts (112, 114, 116) fixant l'ébauche métallique individuelle à un bord longitudinal de la boucle en feuillard métallique ; et
(c) former un composant fini (188, 190, 198, 200) en traitant l'assemblage de boucle soudé à l'aide d'un appareil de matriçage (180).

2. Procédé de formage de métal selon la revendication 1, dans lequel la pluralité d'ébauches métalliques individuelles (102, 132, 162) a une première épaisseur et l'au moins une boucle en feuillard métallique (104, 106, 134, 164, 166) a une seconde épaisseur qui est différente de la première épaisseur.

3. Procédé de formage de métal selon la revendication 1, dans lequel l'étape (b) comprend en outre le soudage de la pluralité d'ébauches métalliques individuelles (102, 132, 162) en une première boucle en feuillard métallique (104, 164) et une seconde boucle en feuillard métallique (106, 166), de sorte la pluralité d'ébauches métalliques individuelles se trouvent entre les première et seconde boucles en feuillard métallique.

4. Procédé de formage de métal selon la revendication 3, dans lequel l'étape (b) comprend en outre le formage d'un premier cordon de soudure discontinu (110, 170) entre la pluralité d'ébauches métalliques individuelles (102, 162) et une seconde boucle métallique (104, 164) et un second cordon de soudure discontinu (118, 172) entre la pluralité d'ébauches et la seconde boucle en feuillard métallique (106, 166), dans lequel les premier et second cordons de soudure discontinus comprennent chacun respectivement une pluralité de segments soudés distincts (112, 114, 116) sur la longueur des première et seconde boucles en feuillard métallique.

5. Procédé de formage de métal selon la revendication 1, dans lequel l'étape (b) comprend en outre le soudage d'un premier ensemble (140) et d'un second ensemble d'ébauches métalliques individuelles (142) en une boucle en feuillard métallique (134), de sorte que les premier et second ensembles d'ébauches métalliques individuelles se situent sur des faces opposées de la boucle en feuillard métallique.

6. Procédé de formage de métal selon la revendication 5, dans lequel l'étape (b) comprend en outre le formage d'un premier cordon de soudure discontinu (146) entre le premier ensemble d'ébauches métalliques individuelles (140) et une première face de la boucle en feuillard métallique (134) et un second cordon de soudure discontinu (148) entre le second ensemble d'ébauches métalliques individuelles (142) et une seconde face de la boucle en feuillard métallique, dans lequel les premier et second cordons de soudure discontinus comprennent chacun une pluralité de segments soudés distincts sur la longueur de la boucle en feuillard métallique.

7. Procédé de formage de métal selon la revendication 1, dans lequel l'étape (c) comprend en outre le formage du composant fini (188, 190, 198, 200) en traitant l'assemblage de boucle soudé (100, 130, 160) par un procédé de poinçonnage progressif.

8. Procédé de formage de métal selon la revendication 1, dans lequel l'étape (c) comprend en outre le formage du composant fini (188, 190, 198, 200) en traitant une section unique de l'assemblage de boucle soudé (100, 130, 160) qui inclut au moins une ébauche métallique (102, 132, 162) et une section d'au moins une boucle en feuillard métallique (104, 106, 134, 164, 166), dans lequel une pluralité de composants finis sont constitués simultanément en partant de la section unique de l'assemblage de boucle soudé.

9. Assemblage de boucle soudé (100, 130, 160) destiné à une utilisation dans un procédé de formage de métal, comprenant :
au moins une boucle en feuillard métallique (104, 106, 134, 164, 166) ; et
une pluralité d'ébauches métalliques individuelles (102, 132, 162) qui sont soudées à la boucle en feuillard métallique à différents endroits sur la longueur longitudinale de la boucle en feuillard métallique par un cordon de soudure discontinu (110, 118, 146, 148, 170, 172) qui inclut une pluralité de segments soudés distincts (112, 114, 116) qui fixent les ébauches métalliques individuelles à un bord longitudinal de la boucle en feuillard métallique.

10. Assemblage de boucle soudé selon la revendication 9, dans lequel la pluralité d'ébauches métalliques individuelles (102, 132, 162) a une première épaisseur et la boucle en feuillard métallique (104, 106, 134, 164, 166) a une seconde épaisseur qui est différente de la première épaisseur.

11. Assemblage de boucle soudé selon la revendication 9, dans lequel la pluralité d'ébauches métalliques individuelles (102, 132, 162) sont soudées à une première boucle en feuillard métallique (104, 164) et une seconde boucle en feuillard métallique (106, 166), de sorte que la pluralité d'ébauches métalliques individuelles se situent entre les première et seconde boucles en feuillard métallique.

12. Assemblage de boucle soudé selon la revendication 11, comprenant en outre un premier cordon de soudure discontinu (110, 170) entre la pluralité d'ébauches métalliques individuelles (102, 162) et la première boucle en feuillard métallique (104, 164) et un second cordon de soudure discontinu (118, 172) entre la pluralité d'ébauches et la seconde boucle en feuillard métallique (106, 166), dans lequel les premier et second cordon de soudure discontinus incluent respectivement une pluralité de segments soudés distincts (112, 114, 116) sur la longueur des première et seconde boucles en feuillard métalliques.

13. Assemblage de boucle soudé selon la revendication 9, dans lequel la pluralité d'ébauches métalliques individuelles (132) inclut un premier ensemble d'ébauches métalliques individuelles (140) qui sont soudées à une première face de la boucle en feuillard métallique (134) à différents endroits sur sa longueur et un second ensemble d'ébauches métalliques individuelles (142) qui sont soudées à une seconde face de la boucle en feuillard métallique à différents endroits sur sa longueur.

14. Assemblage de boucle soudé selon la revendication 13, comprenant en outre un premier cordon de soudure discontinu (146) entre le premier ensemble d'ébauches métalliques individuelles (140) et la première face de la boucle en feuillard métallique (134) et un second cordon de soudure discontinu (148) entre le second ensemble d'ébauches métalliques individuelles (142) et la seconde face de la boucle en feuillard métallique, dans lequel les premier et second cordons de soudure discontinus incluent chacun une pluralité de segments soudés distincts sur la longueur de la boucle en feuillard métallique.

15. Assemblage de boucle soudé selon la revendication 9, dans lequel une section unique de l'assemblage de boucle soudé (100, 130, 160) inclut au moins une ébauche métallique (102, 132, 162) et une section d'au moins une boucle en feuillard métallique (104, 106, 134, 164, 166), et une pluralité de composants finis (188, 190, 198, 200) peuvent être simultanément constitués à partir de la section unique de l'assemblage de boucle soudé.
